# EUROPÄISCHE PATENTSCHRIFT

(11) **EP 1 477 948 B1**
(45) Veröffentlichungstag und Bekanntmachung des Hinweises auf die Patenterteilung: **09.01.2008**
(21) Anmeldenummer: 03010556.3
(22) Anmeldetag: 12.05.2003
(51) Int. Cl.: G08B 7/06, G08B 13/196, G08B 17/12

(54) **Meldeanlage mit bildgebendem Sensor**
Signalling system with imaging sensor
Système de signalisation avec capteur d'images

(43) Veröffentlichungstag der Anmeldung: 17.11.2004
(73) Patentinhaber: Siemens Schweiz AG, 8047 Zürich (CH)
(72) Erfinder: Wieser, Dieter, 8700 Küsnacht (CH); Brupbacher, Thomas, Dr., 8706 Meilen (CH)
(74) Vertreter: Weise, Wolfgang

(56) Entgegenhaltungen:
- WO-A-00/14693
- WO-A-97/08896
- WO-A-99/10855

## Beschreibung

Die vorliegende Erfindung betrifft eine Meldeanlage für das Auftreten von Ereignissen in einem nachfolgend als Überwachungsraum bezeichneten Gebiet, mit einem bildgebenden Sensor für die Aufnahme von Bildern des Überwachungsraums, einem Prozessor für die Verarbeitung der vom bildgebenden Sensor gelieferten Bildsignale, einer Zentrale und einer Kommunikationsverbindung mit der Zentrale.

Die WO 97/08896 beschreibt ein Sicherheits-System mit einer akustischen SensorenAnordnung. Eine Kamera ist in der Nähe dieser Anordnungen angebracht und wird automatisch auf das geräusch-produzierende Ereignis gerichtet. Die Ereignisdaten werden in einem Speicher vorab gespeichert und das System kann dabei lernen, ob das Ereignis einen Notfall darstellt oder nicht.

Meldeanlagen dieser Art, dienen in erster Linie zur Brand- und Einbruchüberwachung (siehe beispielsweise WO-A-01/67415), wobei das Bild des bildgebenden Sensors in einem Prozessor ausgewertet wird, der im Alarmfall über die Kommunikationsmittel eine Alarmmeldung an die Zentrale sendet. Es ist auch bekannt, beispielsweise, wenn es sich beim Überwachungsraum um einen Strassentunnel handelt, das Bild des bildgebenden Sensors in die Zentrale zu übertragen und dort durch das Bedienungspersonal das Verkehrgeschehen zu beobachten (siehe beispielsweise WO-A-02/054364). Man kann sich auch vorstellen, dass das Bedienungspersonal bei Eingehen eines Alarms diesen verifiziert und die Einsatzkräfte an den Einsatzort dirigiert.

Während früher für die einzelnen Ereignisse, wie beispielsweise Brand oder Einbruch oder auch Verkehrsüberwachung spezielle Meldertypen eingesetzt wurden, ermöglicht die moderne Bild-verarbeitung die Verwendung eines einzigen Meldertyps, nämlich eines bildgebenden Sensors, beispielsweise einer Videokamera, für die verschiedenen Arten von Ereignissen, wobei das Bildsignal des bildgebenden Sensors nach verschiedenen Kriterien ausgewertet wird.

All den bisher beschriebenen Arten von Ereignissen ist gemeinsam, dass der durch den bildgebenden Sensor gebildete Melder vor Ort einen Alarm auslöst und diesen an die Zentrale weiter meldet und gegebenenfalls auch die Sensorbilder an die Zentrale überträgt, wo das Personal zwar die Bilder betrachten aber mit dem bildgebenden Sensor nicht interaktiv kommunizieren kann. Letzteres ist ein Nachteil, wenn man an weitere mögliche Applikationen des einen bildgebenden Sensor aufweisenden Melders denkt. So ist beispielsweise in der WO-A-00/14693 ein Brandmelder beschrieben, der zur Detektion von zwei verschieden hohen Werten einer Brandkenngrösse ausgebildet ist, von denen der tiefere das Auftreten von Rauch und der höhere die Unbenutzbarkeit des betreffenden Fluchtwegs anzeigt. Diesem Brandmelder kann eine Kamera zur Überwachung des den Melder umgebenden Raums zugeordnet sein. Die Kamera überträgt die aufgenommenen Bilder an die Zentrale, wodurch die Einsatzkräfte die Möglichkeit erhalten, die Fluchtwege visuell zu überwachen und deren Benutzbarkeit festzustellen.

Bei diesem Brandmelder wäre es vorteilhaft, wenn die Einsatzkräfte zusätzlich die Möglichkeit hätten, anhand der gelieferten Bilder Massnahmen in dem betreffenden Fluchtweg zu ergreifen und/oder wenn die Fluchtwege automatisch gesperrt werden könnten. Es wäre auch vorteilhaft, die Kombination aus Brandmelder und Kamera durch eine Meldeanlage der eingangs genannten Art zu ersetzen und dadurch den apparativen Aufwand zu vereinfachen.

Durch die Erfindung soll nun eine kostengünstige Meldeanlage der genannten Art mit einem möglichst breiten Anwendungsspektrum geschaffen werden. Diese Aufgabe wird erfindungsgemäss dadurch gelöst, dass die genannte Kommunikationsverbindung für Zweiwegkommunikation ausgebildet ist, und dass im Bereich des bildgebenden Sensors Regel- und/oder Kommunikationsmittel vorgesehen sind, deren Steuerung und/oder Betätigung anhand der vom bildgebender Sensor aufgenommenen Bilder erfolgt.

Die vorgeschlagene Meldeanlage umfasst also einen bildgebenden Sensor zur Beobachtung eines Überwachungsraums, der über die Kommunikationsverbindung mit einer Zentrale verbunden ist. Die Kommunikationsverbindung ist für Zweiwegkommunikation ausgebildet, so dass von der Zentrale aus mit dem bildgebenden Sensor kommuniziert werden kann, um im Überwachungsraum Aktionen auszulösen. Solche Aktionen können die Steuerung von optischen Anzeigen und/oder die Kommunikation mit sich im Überwachungsraum befindenden Personen sein. Dadurch wird die Meldeanlage wesentlicher Bestandteil eines Evakuationssystems, mit dem Personen aus gefährdeten Bereichen gerettet werden können.

Die erfindungsgemässe Meldeanlage ist dadurch gekennzeichnet, dass die genannten Regel- und/oder Kommunikationsmittel eine optische Anzeige für Fluchtwege und/oder deren Benutzbarkeit umfassen. Gemäss einer bevorzugten Ausführungsform umfassen die genannten Regel- und/oder Kommunikationsmittel Mittel für die Auslösung/Aktivierung einer stationären Löschanlage.

Eine weitere bevorzugte Ausführungsform der erfindungsgemässen Meldeanlage ist dadurch gekennzeichnet, dass die genannten Regel- und/oder Kommunikationsmittel einen Lautsprecher für die Durchsagen an im betreffenden Überwachungsraum befindliche Personen umfassen. Diese bevorzugte Ausführungsform erweitert die Meldeanlage zu einem so genannten "Voice-Systems", das ist ein System zur Durchsage von Evakuationshinweisen an sich in einem gefährdeten Gebäude befindliche Personen.

Eine weitere bevorzugte Ausführungsform ist dadurch gekennzeichnet, dass eine automatische Bestimmung der Sichtverhältnisse im Überwachungsraum erfolgt. Diese bevorzugte Ausführungsform ist besonders für die Anwendung in einem Evakuationssystem äusserst vorteilhaft, weil die Sichtverhältnisse ein zuverlässiges Kriterium für die Benutzbarkeit von Fluchtwegen darstellen, anhand dessen der betreffende Fluchtweg durch einen Eingriff von der Zentrale aus oder eventuell auch automatisch gesperrt werden kann. Vorzugsweise erfolgt bei Unterschreiten eines minimalen Wertes der Sichtweite eine entsprechende Durchsage in einem Lautsprecher oder eine Anzeige der Nicht-Benutzbarkeit des betreffenden Fluchtweges.

Eine weitere bevorzugte Ausführungsform der erfindungsgemässen Meldeanlage ist gekennzeichnet durch ein im Überwachungsraum angeordnetes Mikrofon, welches ein gezieltes Hineinhören in den Überwachungsraum von der Zentrale aus ermöglicht.

Eine weitere bevorzugte Ausführungsform der erfindungsgemässen Meldeanlage ist dadurch gekennzeichnet, dass der bildgebende Sensor durch eine Kamera gebildet und der Prozessor in die Kamera eingebaut oder unmittelbar mit dieser verbunden ist, dass die Verarbeitung und Auswertung der von der Kamera gelieferten Bildsignale dezentral am Ort der Kamera erfolgt, und dass die Möglichkeit der zentralen Nachverarbeitung der Bildsignale besteht. Vorzugsweise sind die Kamera und der Prozessor mit einem Mikrofon und einem Lautsprecher zu einer Geräteeinheit zusammen gebaut, welche einen multifunktionalen Melder für die Messung der Sichttrübung, die Detektion von Bewegungen und/oder Geräuschen und die Kompression von Bildsignalen bildet. Dieser multifunktionale Melder ist für Branddetektion, Bewegungsdetektion, Geräuschdetektion und Evakuationssteuerung ausgebildet.

Die Geräuschdetektion ermöglicht eine besonders interessante Applikation des erfindungsgemässen multifunktionalen Melders an überfallgefährdeten Stellen, wie beispielsweise in Unterführungen und Parkhäusern. Wenn der Geräuschdetektor durch einen Schreidetektor gebildet ist, bei dessen Ansprechen die von der Kamera gelieferten Bilder auf die Zentrale aufgeschaltet oder andere geeignete Aktionen ausgelöst werden, wird die Wahrscheinlichkeit von Überfällen drastisch reduziert und die Sicherheit von Personen entsprechend erhöht.

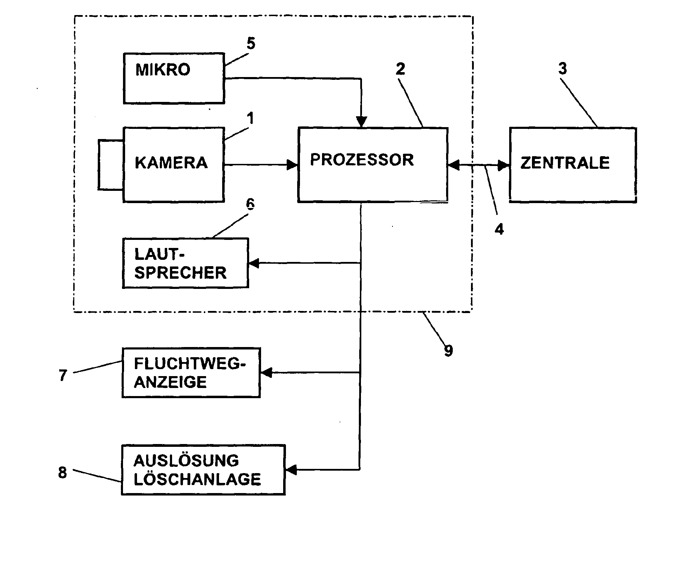

Im Folgenden wird die Erfindung anhand eines Ausführungsbeispiels und der einzigen Zeichnung näher erläutert; die Zeichnung zeigt ein schematisches Blockschaltbild einer erfindungsgemässen Meldeanlage.

Die Meldeanlage besteht darstellungsgemäss im wesentlichen aus einem durch eine Kamera 1 und einen Prozessor 2 gebildeten Ereignismelder, einer Zentrale 3 und einer bidirektionalen Kommunikationsverbindung 4 zwischen Prozessor 2 und Zentrale 3. Der Ausdruck Kamera bezeichnet allgemein einen bildgebenden Sensor und soll nicht einschränkend verstanden werden. Die Kamera 1 ist beispielsweise eine Videokamera, deren Signale digitalisiert und an den Prozessor 2 übertragen werden, wobei der Prozessor 2 sowohl in der Kamera 1 als auch in der Zentrale 3 als auch zwischen Kamera 1 und Zentrale 3 vorgesehen sein kann. Vorzugsweise befindet sich der Prozessor 2 in oder unmittelbar an der Kamera 1, um eine dezentrale Verarbeitung und Auswertung der von der Kamera 1 gelieferten Bildsignale vor Ort zu ermöglichen. Die Kommunikationsverbindung 4 ermöglicht eine bidirektionale Kommunikation zwischen einer vom Ereignismelder räumlich getrennten Kontrollstation, beispielsweise der Zentrale 2, und dem durch Kamera 1 und Prozessor 2 gebildeten Ereignismelder.

Die Kamera 1 kann auch selbst schon einen digitalen Ausgang aufweisen, beispielsweise nach dem Standard IEEE 1394. Das an die Zentrale 3 übertragene Signal kann ein Bildsignal oder ein rein digitaler Datenstrom sein, in beiden Fällen in der Regel in komprimierter Form. Die Übertragung des Bildsignals an die Zentrale 3 ermöglicht dessen zentrale Nachverarbeitung, die Verifizierung von durch die dezentrale Auswertung getroffenen Entscheidungen sowie die Einleitung von geeigneten Massnahmen.

Die Kamera 1 kann auch ein CMOS Micro-Camera Modul der für Verwendung in Mobiltelefonen vorgesehenen Art ein, mit einer Optik und einem einzigen Chip, welcher die Funktionen Bildsensor und Bildprozessor ausführt. Die Abmessungen des Kameramoduls liegen unterhalb von 10 mal 10 mal 5 mm; der Bildsensor zeichnet sich durch einen sehr geringen Stromverbrauch aus. Das von der Kamera 1 aufgenommene Bild ist dann ein Pixel-Bild des Überwachungsraums, welches zu einer Helligkeitsinformation der Zeilen und Reihen der Pixel verarbeitet wird. Die Auswertung erfolgt vorzugsweise im Prozessor 2, wobei einer bestimmten Anzahl von beispielsweise 8 bis 10 Kameras 1 jeweils ein gemeinsamer Prozessor 2 zugeordnet ist.

Vorzugsweise enthält der durch Kamera 1 und Prozessor 2 gebildete Ereignismelder eine adressierbare, bidirektionale, digitale Kommunikationsverbindung, man spricht in diesem Zusammenhang auch von einem IP-Signal (IP = Internet Protocol), wodurch die Integration der dargestellten Meldeanlage in bestehende Kommunikationsnetzwerke ermöglicht wird.

Die bidirektionale Kommunikationsverbindung 4 bedeutet unter anderem, dass man von der Zentrale 3 aus in den Überwachungsraum hineinsehen kann und beispielsweise ein Alarmsignal verifizieren und/oder im Überwachungsraum bestimmte Aktionen auslösen kann. Mit Überwachungsraum wird das vom Ereignismelder überwachte Gebiet bezeichnet, das sich innerhalb eines Gebäudes oder im Freien befinden oder sich auch von einem Innneraum nach aussen und umgekehrt erstrecken kann. Vorzugsweise ist im Überwachungsraum ein mit dem Prozessor 2 verbundenes Mikrofon 5 vorgesehen, so dass auch Audiosignale verarbeitet und zur Zentrale 3 übertragen werden können. Die letztere Funktion kann beispielsweise als so genanntes "listen in" erfolgen, indem man im Alarmfall von der Zentrale 3 aus das Mikrofon 5 einschaltet und in den Überwachungsraum hinein hört. Diese Funktion ist besonders für Bewegungs- und Einbruchüberwachung gut geeignet, weil Einbrecher in der Regel typische Geräusche erzeugen.

Wie der Zeichnung weiter zu entnehmen ist, sind dem durch Kamera 1 und Prozessor 2 gebildeten Ereignismelder weitere im Folgenden als Regel- und/oder Kommunikationsmittel bezeichnete Einrichtungen zugeordnet, deren Steuerung und/oder Betätigung anhand der von der Kamera 1 aufgenommenen Bilder erfolgt, und zwar automatisch oder von der Zentrale aus.

Diese Regel- und/oder Kommunikationsmittel 5 können beispielsweise Lautsprecher 5 sein oder optische Anzeigen 7, wie beispielsweise Markierungen von Fluchtwegen, oder Mittel 8 zur Auslösung/Aktivierung einer stationären Löschanlage oder ein Mittel zur Betätigung eines Schliessmechanismus zum Abschliessen des betreffenden Überwachungsraumes, und dergleichen mehr.

Die dargestellte Meldeanlage ist für eine, mehrere oder auch alle der folgenden Applikationen ausgelegt:
- Detektion von Rauch oder Flammen: Im scharf geschalteten Betriebszustand der Anlage macht die Kamera 1 in Abständen von Sekundenbruchteilen jeweils ein Bild des Überwachungsraums. Dieses wird mit Referenzbildern verglichen, die für das Auftreten gewisser Gefahrenkenngrössen charakteristisch sind. Derartige Referenzbilder können beispielsweise Bilder von Flammen, Objekten, Zuständen oder Bewegungen sein. Ausserdem wird das Bild mit einem oder mehreren zeitlich folgenden Bildern verglichen, um eine Änderung in der Bildfolge erkennen zu können. Eine solche Änderung kann beispielsweise darin bestehen, dass die Struktur des Überwachungsraums unscharf wird, was ein Indiz für das Auftreten von Rauch wäre.
   Zur Erkennung einer unscharfen Struktur des Überwachungsraums wird eine Bestimmung der Helligkeit von Gruppen von Pixeln der Bilder der Kamera 1 vorgenommen. Diese erfolgt durch einen Prozess, bei dem ein für die Helligkeit repräsentativer Wert gewonnen wird, dessen zeitlicher Verlauf auf eine für das Auftreten von Rauch charakteristische Veränderung untersucht wird. Beispielsweise erfolgt die Bestimmung der Helligkeit der Pixel durch einen Kantenextraktionsprozess, bei dem jedem Pixel ein Kantenwert zugeordnet und mit einem Mittelwert verglichen wird. Zum Kantenextraktionsprozess wird auf die WO-A-02/054364 verwiesen.
   Eine andere Möglichkeit der Rauchdetektion besteht darin, dass die Kamera 1 das durch das Auftreten von Rauch verursachte Streulicht misst. Dieses Verfahren entspricht dem bei den heute weit verbreiteten Streulicht-Rauchmeldern angewandten Messprinzip, aber mit dem Unterschied, dass der Messraum, in dem das Streulicht gemessen wird, nicht eine im Inneren des Melders vorgesehene Messkammer sondern der Überwachungsraum selbst ist. Zur Verstärkung des Streulichts können an oder neben der Kamera Lichtquellen (nicht dargestellt), beispielsweise LEDs oder IREDs, vorgesehen sein, die den Überwachungsaum intermittierend oder ständig beleuchten. Man kann die Anlage auch so betreiben, dass bei ausreichender Beleuchtung nach dem gerade beschriebenen Verfahren die Struktur des Überwachungsraums überwacht und bei Dunkelheit das Streulicht gemessen wird. Zu diesem Zweck wird aus dem Bild der Kamera 1 die Helligkeit im Überwachungsraum bestimmt und die Kamera 1 anhand der Helligkeit in den entsprechenden Modus geschaltet.
- Bewegungsmeldung: Eine weitere wichtige Gefahrenkenngrösse, die mit der Meldeanlage überwacht werden kann, ist die Bewegung von Personen im Überwachungsraum. Durch den Vergleich der Bilder der Kamera 1 mit einem den Überwachungsraum ohne fremde Objekte wiedergebenden Referenzbild können fremde Objekte lokalisiert und ihre Bewegung kann anhand eines Vergleichs aufeinander folgender Bilder verfolgt werden. Eine genauere Untersuchung des Bildbereichs mit dem fremden Objekt ermöglicht eine Klassifizierung des Objekts und insbesondere die Unterscheidung zwischen Menschen und Tieren.
- Detektion der Anwesenheit von Personen (Präsenzdetektion): Die Bewegungsmeldung liefert eine eindeutige Angabe, dass sich in dem betreffenden Raum eine nicht schlafende Person befindet. Da nicht schlafende Menschen einerseits etwas tun können, was einen Fehlalarm auslösen kann und andererseits auch den kleinsten Schwelbrand wesentlich früher riechen als der beste Rauchmelder ihn detektieren kann, ist es sinnvoll, die Empfindlichkeit der Branddetektion bei Anwesenheit von Personen in dem betreffenden Raum geringer einzustellen als bei deren Nicht-Anwesenheit. Die dargestellte Meldeanlage kann diese Empfindlichkeitsumschaltung anhand der Überwachung auf sich im Übewachungsraum bewegende Personen automatisch vornehmen.
- Evakuation von Personen aus einem gefährdeten, beispielsweise brennenden, Gebäude: Da das Bildsignal der Kamera 1 Informationen über den Ausbruch eines Brandes, das Vorhandensein von Menschen in einem Gebäude und die Benutzbarkeit von Räumen liefert, stellt diese ein ausgezeichnetes Hilfsmittel für die gezielte Evakuation von Menschen aus einem brennenden Gebäude dar. Zu diesem Zweck ist die Meldeanlage mit steuerbaren Fluchtweganzeigen 7 verbunden, deren Steuerung anhand des Bildsignals erfolgt. Auf diese Weise können unpassierbare Gänge oder Stiegenhäuser automatisch gesperrt und die zu evakuierenden Menschen können in ungefährdete Fluchtwege geleitet werden. Durch die erwähnten Lautsprecher 6 kann man Durchsagen an die zu rettenden Menschen machen und sie auf die Gefahrensituation hinweisen, sie zu Handlungen auffordern und über den Ablauf der Evakuation informieren. Die Mikrofone 5 ermöglichen ein Hineinhören in die überwachten Räume, was selbstverständlich auch in Zusammenhang mit Präsenzdetektion und Bewegungsmeldung vorteilhaft ist.
- Durch die Mikrofone ist ein Mittel zur Detektion von Hilferufen und Schreien zur Verfügung gestellt, das sich beispielsweise sehr gut für die Verwendung in Tiefgaragen, Bahnhöfen (unter- und oberirdisch), Unterführungen, Tiefpassagen und dergleichen eignet. Sobald ein Schrei detektiert wird, was vorzugsweise anhand der Frequenz erfolgt, wird die betreffende Bildgebender Sensor 1 automatisch auf eine Zentrale 3 aufgeschaltet, von der aus dann die nötigen Hilfsmassnahmen für die gefährdete Personen eingeleitet werden. Dabei kann ein Hineinsprechen in den Überwachungsraum, bei dem der Täter auf die Überwachung und den laufenden Einsatz hingewiesen wird, für die gefährdete Person sehr hilfreich sein.
- Man kann auch das Signal der Kamera 1 dazu verwenden, das Verhalten von Personen beispielsweise in Hotelgängen, an Geldautomaten oder in Schalterhallen ganz allgemein zu analysieren, um Rückschlüsse auf potentielle Gefahren ziehen zu können. Um die Akzeptanz dieser Videoüberwachung zu erhöhen, kann es hilfreich sein, eine Gesichtsdetektion vorzunehmen und die Gesichter der im Bild erscheinenden Personen unkenntlich zu machen.

Die erwähnte Detektion von Schreien und Hilferufen ist eine vielseitig einsetzbare und ein verbreitetes Bedürfnis befriedigende Applikation der beschriebenen Meldeanlage, wobei man hier allgemein von Geräuschdetektion sprechen und verschiedenste Geräuschsignaturen und Frequenzen überwachen kann. Neben den schon erwähnten Hilferufen und Hilfeschreien kommt hier in erster Linie beispielsweise noch das typische Knistern eines Feuers, oder das typische Geräusch bei der Verwendung einer Spraydose (Graffiti) in Frage. Alle diese Geräusche können für die Detektion der betreffenden Ereignisse, die Auslösung von Gegenmassnahmen und/oder die Beweissicherung verwendet werden.

Für die Verwendung als Geräuschdetektor ist es vorteilhaft, die Kamera 1, den Prozessor 2, das Mikrofon 5 und den Lautsprecher 5 in einen eine Geräteinheit bildenden multifunktionalen Melder 9 für die Messung der Sichttrübung, die Detektion von Bewegungen und Geräuschen und die Kompression von Bildsignalen zu integrieren. Dieser multifunktionale Melder 9 wäre eine Videokamera 1 mit einem Prozessor 2, einem Mikrofon 5 und einem Lautsprecher 6, die entweder mit einer Zentrale 3 verbunden oder eventuell auch als stand alone Gerät ausgebildet sein könnte. Zusätzlich könnte an den Melder 9 eine Lichtquelle für Schockbeleuchtung und/oder eine Sirene angeschlossen sein. Bei Verwendung des Melders 9 als stand alone Gerät ist es vorteilhaft, diesen mit einer in der Nähe des Melders 9 montierten Station zu verbinden, welche eine sichere Speicherung der vom Melder 9 registrierten Ereignisse und damit eine einwandfreie Beweissicherung und eine einfache Auslesung der betreffenden Daten ermöglicht. Eine Einrichtung dieser Art ist in der EP-A-1 233 385 beschrieben, auf welche hiermit ausdrücklich Bezug genommen wird.

## Patentansprüche

1. Meldeanlage für das Auftreten von Ereignissen in einem nachfolgend als Überwachungsraum bezeichneten Gebiet, mit einem bildgebenden Sensor (1) für die Aufnahme von Bildern des Überwachungsraums, einem Prozessor (2) für die Verarbeitung der vom bildgebenden Sensor (1) gelieferten Bildsignale, einer Zentrale (3) und einer Kommunikationsverbindung (4) mit der Zentrale (3), **dadurch gekennzeichnet, dass** die genannte Kommunikationsverbindung (4) für Zweiwegkommunikation ausgebildet ist und im Bereich des bildgebenden Sensors (1) Regel- und/oder Kommunikationsmittel vorgesehen sind, deren Steuerung und/oder Betätigung anhand der aufgenommen Bilder erfolgt,
wobei die genannten Kommunikationsmittel, eine optische Anzeige für Fluchtwege umfassen, und die genannten Regelmittel die Benutzbarkeit dieser Fluchtwege betreffen.

2. Meldeanlage nach Anspruch 1, **dadurch gekennzeichnet, dass** die genannten Regel- und/oder Kommunikationsmittel einen Lautsprecher (6) für Durchsagen an im betreffenden Überwachungsraum befindliche Personen umfassen.

3. Meldeanlage nach einem der Ansprüche 1 und 2, **dadurch gekennzeichnet, dass** die genannten Regel- und/oder Kommunikationsmittel Mittel (8) für die Auslösung/Aktivierung einer stationären Löschanlagen umfassen.

4. Meldeanlage nach Anspruch 2, **dadurch gekennzeichnet, dass** eine automatische Bestimmung der Sichtverhältnissse im Überwachungsraum erfolgt.

5. Meldeanlage nach Anspruch 4, **dadurch gekennzeichnet, dass** bei Unterschreiten eines minimalen Wertes der Sichtweite eine entsprechende Durchsage in dem oder einem Lautsprecher (6) erfolgt.

6. Meldeanlage nach Anspruch 4, **dadurch gekennzeichnet, dass** bei Unterschreiten eines minimalen Wertes der Sichtweite eine Anzeige der Nicht-Benutzbarkeit des betreffenden Fluchtweges erfolgt.

7. Meldeanlage nach einem der Ansprüche 1 bis 6, **gekennzeichnet durch** ein im Überwachungsraum angeordnetes Mikrofon (5), welches ein gezieltes Hineinhören in den Überwachungsraum von der Zentrale (3) aus ermöglicht.

8. Meldeanlage nach Anspruch 7, **dadurch gekennzeichnet, dass** das Mikrofon (5) Teil eines Geräuschdetektors bildet, bei dessen Ansprechen eine Aktion ausgelöst wird.

9. Meldeanlage nach Anspruch 8, **dadurch gekennzeichnet, dass** der Geräuschdetektor durch einen Schreidetektor gebildet ist.

10. Meldeanlage nach Anspruch 9, **dadurch gekennzeichnet, dass** durch das Ansprechen des Schreidetektors die vom bildgebenden Sensor (1) gelieferten Bilder auf die Zentrale (3) aufgeschaltet werden und/oder eine Durchsage in einem Lautsprecher (6) und/oder eine Schockbeleuchtung ausgelöst wird.

11. Meldeanlage nach einem der Ansprüche 1 bis 10, **dadurch gekennzeichnet, dass** eine automatische Bestimmung der Anwesenheit von Personen im Überwachungsraum erfolgt.

12. Meldeanlage nach einem der Ansprüche 1 bis 11, **dadurch gekennzeichnet, dass** eine Überwachung des Eindringens von Personen in den Überwachungsraum erfolgt.

13. Meldeanlage nach einem der Ansprüche 1 bis 12, **dadurch gekennzeichnet, dass** der bildgebende Sensor (1) durch eine Kamera gebildet und der Prozessor (2) in die Kamera eingebaut oder unmittelbar mit dieser verbunden ist, dass die Verarbeitung und Auswertung der von der Kamera gelieferten Bildsignale dezentral am Ort der Kamera erfolgt, und dass die Möglichkeit einer zentralen Nachverarbeitung der Bildsignale besteht.

14. Meldeanlage nach Anspruch 13, **dadurch gekennzeichnet, dass** die Kamera und der Prozessor (2) mit einem Mikrofon (5) und einem Lautsprecher (6) zu einer Geräteeinheit zusammen gebaut sind, welche einen multifunktionalen Melder (9) für die Messung der Sichttrübung, die Detektion von Bewegungen und/oder Geräuschen und die Kompression von Bildsignalen bildet.

15. Meldeanlage nach Anspruch 14, **dadurch gekennzeichnet, dass** der multifunktionale Melder (9) für Rauchdetektion, Bewegungsdetektion, Geräuschdetektion und Evakuationssteuerung ausgebildet ist.

16. Meldeanlage nach Anspruch 15, **dadurch gekennzeichnet, dass** der multifunktionale Melder (9) einen Ringspeicher für die Speicherung der unmittelbar vor und nach einem Ereignis aufgenommenen Bildsignale und eine adressierbare, bidirektionale, digitale Kommunikationsverbindung enthält.

## Claims

1. Signaling system for the occurrence of events in a region which is referred to in the following text as a monitoring area, having an imaging sensor (1) for recording images of the monitoring area, having a processor (2) for processing the image signals which are supplied from the imaging sensor (1), having a control center (3) and having a communication link (4) to the control center (3), **characterized in that** said communication link (4) is designed for two-way communication, and **in that** control and/or communication means are provided in the area of the imaging sensor (1), which means are controlled and/or operated on the basis of the recorded images in which the said communication means comprise a visual display for escape routes, and the said control means relate to the usability of the escape routes.

2. Signaling system according to claim 1, **characterized in that** said control and/or communication means have a loudspeaker (6) for announcement to people who are located in the relevant monitoring area.

3. Signaling system according to one of claims 1 and 2, **characterized in that** said control and/or communication means have means (8) for initiation/activation of a stationary extinguishing system.

4. Signaling system according to claim 2, **characterized in that** the visual conditions in the monitoring area are determined automatically.

5. Signaling system according to claim 4, **characterized in that**, when the visibility falls below a minimum level, an appropriate announcement is made on the or a loudspeaker (6).

6. Signaling system according to claim 4, **characterized in that**, if the visibility falls below a minimum level, the non-usability of the relevant escape route is indicated.

7. Signaling system according to one of claims 1 to 6, **characterized by** a microphone (5) which is arranged in the monitoring area and allows the control center (3) to deliberately listen to the monitoring area.

8. Signaling system according to claim 7, **characterized in that** the microphone (5) forms part of a noise detector, on whose response an action is initiated.

9. Signaling system according to claim 8, **characterized in that** the noise detector is formed by a scream detector.

10. Signaling system according to claim 9, **characterized in that** the response of the scream detector connects the images which are supplied from the imaging sensor (1) to the control center (3), and/or results in an announcement being initiated in a loudspeaker (6) and/or in shock illumination being initiated.

11. Signaling system according to one of claims 1 to 10, **characterized in that** the presence of people in the monitoring area is determined automatically.

12. Signaling system according to one of claims 1 to 11, **characterized in that** the monitoring area is monitored for people entering it.

13. Signaling system according to one of claims 1 to 12, **characterized in that** the imaging sensor (1) is formed by a camera, and the processor (2) is installed in the camera or is connected directly to it, **in that** the processing and evaluation of the image signals which are supplied from the camera are carried out locally at the location of the camera, and **in that** it is possible to post-process the image signals centrally.

14. Signaling system according to claim 13, **characterized in that** the camera and the processor (2) are combined with a microphone (5) and a loudspeaker (6) to form an appliance unit, which forms a multifunctional signaling device (9) for the measurement of visual perturbation, the detection of movements and/or noise, and the compression of image signals.

15. Signaling system according to claim 14, **characterized in that** the multifunctional signaling device (9) is designed for smoke detection, movement detection, noise detection and evacuation control.

16. Signaling system according to claim 15, **characterized in that** the multifunctional signaling device (9) contains a ring memory for the storage of the image signals which have been recorded immediately before and after an event, and an addressable, bidirectional, digital communication link.

## Revendications

1. Installation de signalisation pour l'apparition d'événement dans une zone appelée ci-dessous espace surveillé, avec un capteur générateur d'images (1) pour l'enregistrement d'images de l'espace surveillé, avec un processeur (2) pour le traitement des signaux vidéo fournis par le capteur générateur d'images (1), avec une centrale (3) et avec une liaison de communication (4) avec la centrale (3), **caractérisée par le fait que** la liaison de communication (4) mentionnée est conçue pour une communication bidirectionnelle et qu'il est prévu dans la zone du capteur générateur d'images (1) des moyens de réglage et/ou de communication dont la commande et/ou l'actionnement s'effectuent à l'aide des images enregistrées, les moyens de communication mentionnés comprenant un afficheur pour des issues de secours et les moyens de réglage mentionnés concernant la disponibilité de ces issues de secours.

2. Installation de signalisation selon la revendication 1, **caractérisée par le fait que** les moyens de réglage et/ou de communication comprennent un haut-parleur (6) pour des annonces destinées à des personnes se trouvant dans l'espace surveillé concerné.

3. Installation de signalisation selon l'une des revendications 1 et 2, **caractérisée par le fait que** les moyens de réglage et/ou de communication mentionnés comprennent des moyens (8) pour le déclenchement / activation d'une installation d'extinction stationnaire.

4. Installation de signalisation selon la revendication 2, **caractérisée par le fait qu'**il s'effectue une détermination automatique des conditions de visibilité dans l'espace surveillé.

5. Installation de signalisation selon la revendication 4, **caractérisée par le fait que**, lorsque la distance de visibilité devient inférieure à une certaine valeur minimale, on met en oeuvre la diffusion d'une annonce correspondante par le ou un haut-parleur (6).

6. Installation de signalisation selon la revendication 4, **caractérisée par le fait que**, lorsque la distance de visibilité devient inférieure à une certaine valeur minimale, on met en oeuvre l'affichage de l'indisponibilité de l'issue de secours concernée.

7. Installation de signalisation selon l'une des revendications 1 à 6, **caractérisée par** un microphone (5) qui est placé dans l'espace surveillé et qui permet d'écouter de manière ciblée à partir de la centrale (3) ce qui se passe dans l'espace surveillé.

8. Installation de signalisation selon la revendication 7, **caractérisée par le fait que** le microphone (5) fait partie d'un détecteur de bruit lors de la réaction duquel une action est déclenchée.

9. Installation de signalisation selon la revendication 8, **caractérisée par le fait que** le détecteur de bruit est formé par un détecteur de cris.

10. Installation de signalisation selon la revendication 9, **caractérisée par le fait que**, par la réaction du détecteur de cris, les images fournies par le capteur générateur d'images (1) sont branchées sur la centrale (3) et/ou une annonce dans un haut-parleur (6) et/ou un éclairage de choc sont déclenchés.

11. Installation de signalisation selon l'une des revendications 1 à 10, **caractérisée par le fait qu'**il s'effectue une détermination automatique de la présence de personnes dans l'espace surveillé.

12. Installation de signalisation selon l'une des revendications 1 à 11, **caractérisée par le fait qu'**il s'effectue une surveillance de l'entrée de personnes dans l'espace surveillé.

13. Installation de signalisation selon l'une des revendications 1 à 12, **caractérisée par le fait que** le capteur générateur d'images (1) est formé par une caméra et le processeur (2) est intégré dans la caméra ou directement relié à celle-ci, que le traitement et l'évaluation des signaux vidéo fournis par la caméra s'effectuent de manière décentralisée sur le lieu d'installation de la caméra et qu'il est possible d'effectuer un traitement ultérieur central des signaux vidéo.

14. Installation de signalisation selon la revendication 13, **caractérisée par le fait que** la caméra et le processeur (2) sont réunis avec un microphone (5) et avec un haut-parleur (6) pour former un appareil unique qui constitue un avertisseur multifonctionnel (9) pour la mesure de la détérioration de la visibilité, pour la détection de mouvements et/ou de bruits et pour la compression de signaux vidéo.

15. Installation de signalisation selon la revendication 14, **caractérisée par le fait que** l'avertisseur multifonctionnel (9) est conçu pour la détection de fumées, pour la détection de mouvements, pour la détection de bruits et pour la commande d'évacuations.

16. Installation de signalisation selon la revendication 15, **caractérisée par le fait que** l'avertisseur multifonctionnel (9) contient une mémoire en anneau pour la mémorisation des signaux vidéo enregistrés immédiatement avant et après un événement et une liaison de communication numérique, bidirectionnelle et adressable.
